# EUROPEAN PATENT APPLICATION

(11) **EP 2 953 034 A1**
(43) Date of publication of application: **09.12.2015**
(21) Application number: 15170303.0
(22) Date of filing: 02.06.2015
(51) Int. Cl.: G06F 13/38, G06K 19/00

(54) **PORTABLE ELECTRONIC DEVICE**

(30) Priority: 03.06.2014 JP 2014115007
(71) Applicant: Kabushiki Kaisha Toshiba, Minato-ku Tokyo 105-8001 (JP)
(72) Inventor: TAKEDA, Hajime, Tokyo, Tokyo 105-8001 (JP)
(74) Representative: Horn Kleimann Waitzhofer Patentanwälte PartG mbB

(57) **Abstract**

A portable electronic device of an embodiment has a communication section, a selection section, and a processing section. The communication section can communicate with an external device by a plurality of channels. The selection section selects a specification of class information which indicates a class of a command and included information indicating a channel number of the channel, from a plurality of the specifications of class information, based on prescribed information which is held in an own device and can be changed after a power source has been supplied. The processing section can execute command processings corresponding to a plurality of the specifications of class information, and when the communication section receives a command having the class information, executes the command processing corresponding to the specification of class information that the selection section has selected.

## Description

### FIELD

Embodiments of the present invention relate to a portable electronic device.

### BACKGROUND

In recent years, portable electronic devices such as IC (Integrated Circuit) cards have been widespread. A conventional portable electronic device determines a Class Byte (class information) in a command received from an external device, delivers the command to an application operating on a proper logical channel in accordance with the determination result, and executes a command processing. This CLAbyte is specified by the standardized specification.

However, since the standardized specification has been extended so as to increase the upper limit number of logical channels, for example, there has been a case that, in a conventional portable electronic device, the downward compatibility is lost regarding some values of CLA byte.

### BRIEF DESCRIPTION OF THE DRAWINGS

Fig. 1 shows a hardware configuration example of an IC card of a first embodiment.
Fig. 2 is a block diagram showing a functional configuration example of the IC card of the first embodiment.
Fig. 3 shows an example of specifications of CLAbyte of the first embodiment.
Fig. 4 shows data example which the operating channel information storage section of the first embodiment stores.
Fig. 5 shows a file configuration example of the AP data storage section of the first embodiment.
Fig. 6 shows data example which the management information storage section of the first embodiment stores.
Fig. 7 is a flow chart showing an example of an operation of the IC card of the first embodiment.
Fig. 8 is a flow chart showing an example of an operation of an IC card of a second embodiment.
Fig. 9 is a flow chart showing another example of an operation of the IC card of the second embodiment.
Fig. 10 shows data example which an operating channel information storage section of a third embodiment stores.
Fig. 11 is a flow chart showing an example of an operation of an IC card of the third embodiment.
Fig. 12 shows a configuration example of a command information storage section of a fourth embodiment.
Fig. 13 shows data example which a common command information storage section of the fourth embodiment stores.
Fig. 14 shows data example of AP corresponding information which a management information storage section of the fourth embodiment stores.
Fig. 15 is a flow chart showing an example of an operation of an IC card of the fourth embodiment.
Fig. 16 is a block diagram showing a functional configuration example of an IC card of a fifth embodiment.
Fig. 17 is a flow chart showing an example of an operation of the IC card of the fifth embodiment.

### EMBODIMENT TO PRACTICE THE INVENTION

A portable electronic device of an embodiment has a communication section, a selection section, and a processing section. The communication section can communicate with an external device by a plurality of channels. The selection section selects a specification of class information which indicates a class of a command and includes information indicating a channel number of the channel, from a plurality of the specifications of class information, based on prescribed information which is held in an own device, and can be changed after a power source has been supplied. The processing section can execute command processings corresponding to a plurality of the specifications of class information, and when the communication section receives a command having the class information, executes the command processing corresponding to the specification of class information that the selection section has selected.

Hereinafter, a portable electronic device of embodiments will be described with reference to the drawings. In the following embodiments, an IC card will be described, as an example of a portable electronic device.

### (First Embodiment)

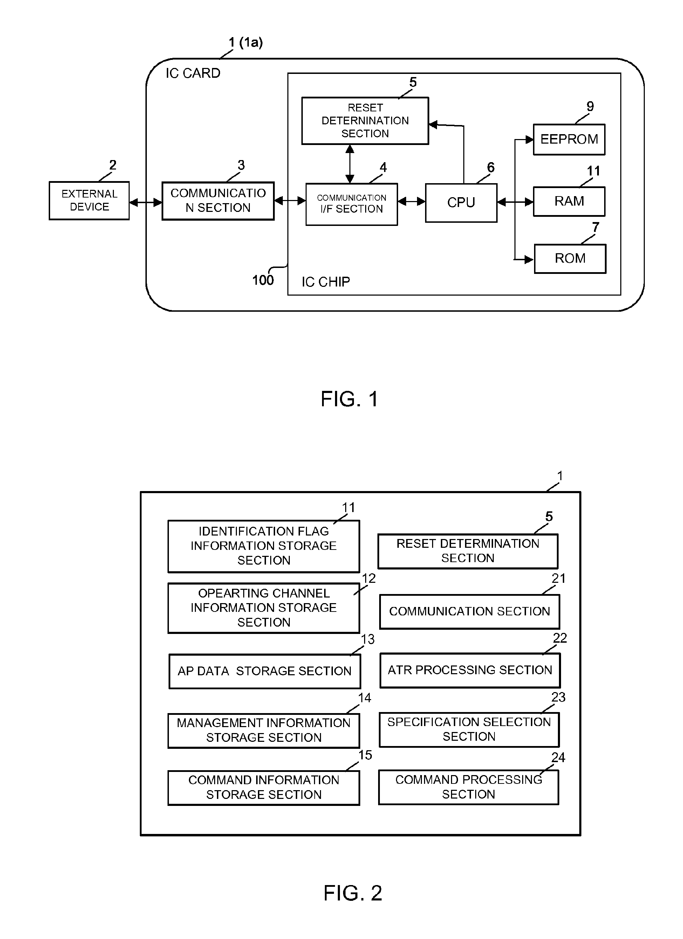

Fig. 1 shows a hardware configuration example of an IC card 1 of a first embodiment.

The IC card 1 is provided with a contact section 3, and an IC chip 100. The IC card 1 is capable of communicating with an external device 2 via the contact section 3.

The contact section 3 has terminals of various signals required for operating the IC card 1. The terminals of the various signals have terminals (a power source terminal, a clock terminal, a reset terminal) for receiving supply of a power source voltage, a clock signal, a reset signal and so on from the external device 2, and a terminal (a serial data input/output terminal (SIO terminal)) for communicating with the external device 2.

The IC chip 100 is an LSI (Large Scale Integration) circuit element such as one chip microprocessor, for example. The IC chip 100 is provided with a communication I/F (Interface) section 4, a reset determination section 5, a CPU (Central Processing Unit) 6, a ROM (Read Only Memory) 7, a RAM (Random Access Memory) 8, an EEPROM (Electrically Erasable Programmable ROM) 9.

The communication I/F section 4 performs communication (transmission/reception of command/response) between the IC card 1 and the external device 2. A command outputted from the external device 2 includes a CLAbyte (class information) indicating a class of the command, an INS byte that is an instruction byte, and parameter bytes (P1, P2). In addition, a response outputted from the IC card 1, in accordance with the received command, includes status bytes (SW1, SW2).

The reset determination section 5 determines whether or not a reset signal is resupplied to the own device, in a state that the supply of the power source voltage is maintained. That is, the reset determination section 5 determines whether the reset processing of the IC card 1 which is executed from the external device 2 is a cold reset, or a warm reset. The cold reset is a reset when the power source voltage is firstly supplied from the contact section 3 to the IC chip 100. The warm reset is a reset when a reset signal is resupplied to the IC card 1 (own device) in the state that the supply of the power source voltage is maintained.

In addition, the reset determination section 5 holds the determination result of whether the reset processing is the cold reset, or the reset processing is the warm reset, as reset information.

The CPU 6 executes a program stored in the ROM 7 or the EEPROM 9, to perform various processings of the IC card 1. The CPU 6 executes a command processing in accordance with a command which the communication I/F section 4 has received, via the contact section 3, for example.

The ROM 7 is a nonvolatile memory such as a mask ROM, for example, and stores a program for executing various processings of the IC card 1, and data such as a command table.

The RAM 8 is a volatile memory, such as an SRAM (Static RAM), for example, and temporarily stores data which is used at the time of performing various processings of IC card 1. The RAM 8 stores a logical channel number which is used at present (opened), and information indicating an application which is operating on each logical channel, in association with each other. Here, the logical channel is a channel which is used when data communication between the external device 2 and the IC card 1 is performed, and the logical channel is designated by the above-described CLA byte. In the IC card 1 of the present embodiment, it is possible to simultaneously open a plurality of logical channels. The number of logical channels which can be opened simultaneously is determined by the specification. The detail of the specification relating to the logical channel will be described later.

In addition, the RAM 8 stores identification flag information to identify a specification of CLA byte (that is, a specification to determine a CLA byte) including information to designate a logical channel. The identification flag information is designation information to designate a specification of CLA byte. In addition, in the present embodiment, any one specification is designated out of two different specifications of "specification A (old specification)" and "specification B (new specification)", described later.

The EEPROM 9 is an electrically rewritable nonvolatile memory, and stores data (for example, application data and so on) which is required to be stored in various processings of the IC card 1. The EEPROM 9 stores ATR (Answer to Reset) data which is outputted corresponding to each of the cold reset, and the warm reset, for example. Here, the ATR data is data which is outputted to the external device 2 when the IC card 1 is reset, and includes communication protocol data and a historical byte and so on of the IC card 1. In addition, the EEPROM 9 stores an application identifier (AID) to identify each application, and CLA specification information indicating a specification to determine a CLA byte, in association with each other. The CLA specification information indicates one specification out of the above-described two specifications.

Next, a functional configuration example of the IC card 1 according to the present embodiment will be described with reference to Fig. 2.

Fig. 2 is a block diagram showing a functional configuration example of the IC card 1 of the present embodiment.

The IC card 1 is provided with an identification flag information storage section 11, an operating channel information storage section 12, an AP data (application data) storage section 13, a management information storage section 14, a command information storage section 15, the reset determination section 5, a communication section 21, an ATR processing section 22, a specification selection section 23, a command processing section 24.

The respective sections shown in Fig. 2 are realized using the hardware shown in Fig. 1.

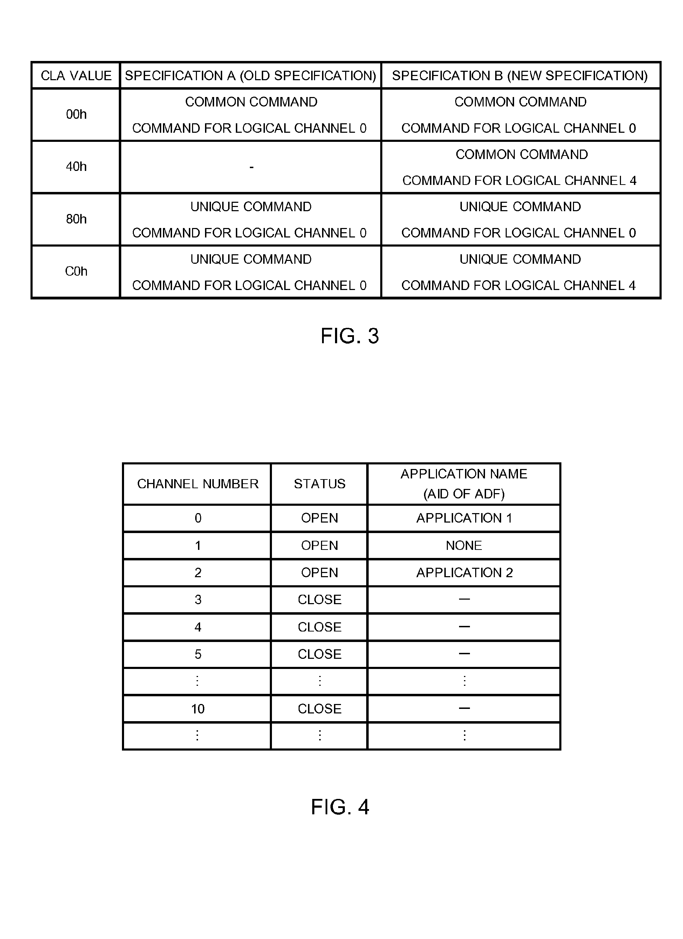

In the present embodiment, as the specification of CLA byte including information to designate a logical channel, there are "specification A (old specification)" and "specification B (new specification)" as shown in Fig. 3. In "specification A (old specification)", the maximum of the number of logical channels is not more than 4. That is, the logical channels are a logical channel 0 - a logical channel 3. In addition, in "specification B (new specification)", the maximum of the number of logical channels is 20 that is not less than 5. That is, the logical channels are a logical channel 0 - a logical channel 19, and "specification B (new specification) is extended in the number of the logical channels.

Fig. 3 is a diagram showing an example of specifications of CLA byte of the present embodiment.

In the specification shown in Fig. 3, "specification A (old specification)" designates a logical channel 0 to a logical channel 3 by low order two bits of the CLA byte. In addition, "specification B (new specification)" designates a logical channel 0 to a logical channel 3 by low order 2 bits of the CLA byte when high order 4 bits of the CLA byte is "X0XX". Here, "X" indicates any bit out of "0" and "1". In addition, "specification B (new specification)" designates a logical channel 4 to a logical channel 19 by low order 4 bits of the CLA byte when high order 4 bits of the CLA byte is "X1XX".

In this manner, the CLA byte includes information to designate the logical channel (information indicating logical channel number).

In the example shown in Fig. 3, in "specification A (old specification)", "00h" (here, "h" indicates hexadecimal data) in "CLA value" indicates a "common command" and a command for "logical channel 0". "80h" in "CLA value" indicates a "unique command" and a command for "logical channel 0". In addition, "C0h" in "CLA value" indicates a "unique command" and a command for "logical channel 0".

In addition, in "specification B (new specification)", "00h" in "CLA value" indicates a "common command" and a command for "logical channel 0". "40h" in "CLA value" indicates a "common command" and a command for "logical channel 4". "80h" in "CLA byte" indicates a "unique command" and a command for "logical channel 0". In addition, "C0h" in "CLA byte" indicates a "unique command" and a command for "logical channel 4".

Returning to the description of Fig. 2, the identification flag information storage section 11 is a storage section which stores identification flag information. The identification flag information storage section 11 is composed of the RAM 8, for example. The identification flag information is information of 2 bits, for example, and indicates "01" in the case of "specification A (old specification)", and indicates "10" in the case of "specification B (new specification)".

The operating channel information storage section 12 stores a logical channel which is operating (opened) at present, and an AID to identify an application in association with each other. The operating channel information storage section 12 is composed of the RAM 8, for example.

Fig. 4 is a diagram showing data example which the operating channel information storage section 12 of the present embodiment stores.

In Fig. 4, the operating channel information storage section 12 stores "channel number", "status", "application name (AID of ADF)" in association. "Channel number" indicates a logical channel number, "status" indicates a status of the logical channel. In addition, the status of the logical channel indicates any state out of "open" (opened), and "close" (closed). In addition "application name (AID of ADF)" is identification information (for example, AID) to identify an application DF (ADF: Application Dedicated File) corresponding to the logical channel.

In addition, in the present embodiment, the description will be made assuming that a logical channel is opened for each application, an ADF is selected and an application corresponding to the relevant ADF operates, on the logical channel.

In the example shown in Fig. 4, it is shown that "status" of each of "channel numbers" "0" - "2" is "open", and these logical channels are operating. In addition, it is shown that "application name (AID of ADF)" corresponding to "channel number" "0" is "application 1". In addition, it is shown that "application name (AID of ADF)" corresponding to "channel number" "2" is "application 2". In addition, it is shown that "application name (AID of ADF)" corresponding to "channel number" "1" is "none", and is a file (for example, an EF (Elementary File) of an ATR file, and so on) common to the all applications.

Returning to the description of Fig. 2 again, the AP data storage section 13 is composed of the EEPROM 9, for example, and stores various application data as files.

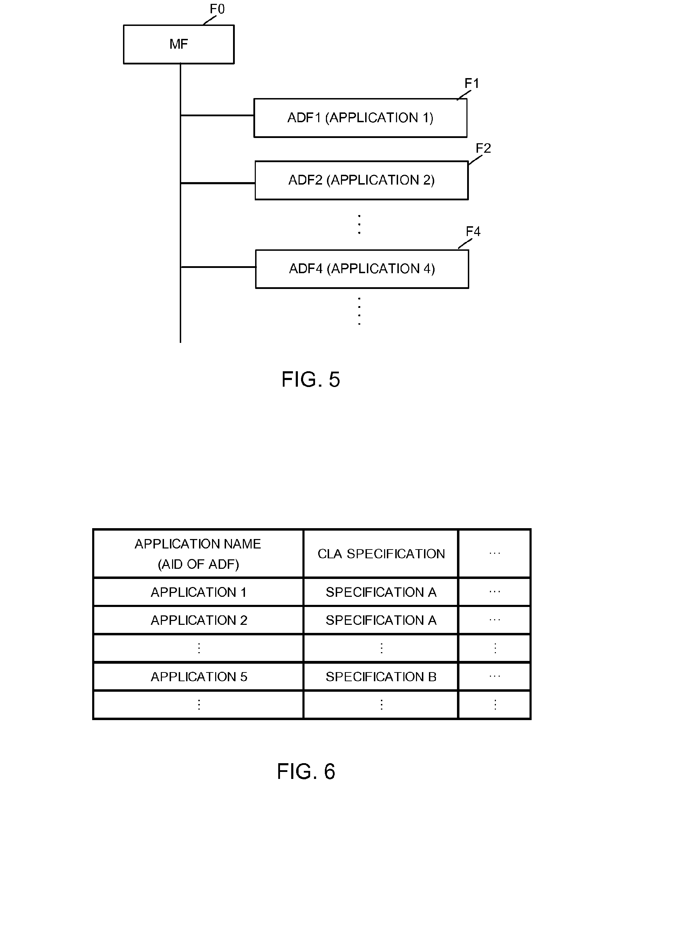

Fig. 5 is a diagram showing an example of a file configuration of the AP data storage section 13 of the present embodiment.

In Fig. 5, the AP data storage section 13 has a hierarchy structure in which ADFs (application DF) ("ADF1" (F1), "ADF2" (F2), ···, "ADF4" (F4), ···) corresponding to applications ("application 1", "application 2", ··· "application 4", ···) exist under an MF (Master File) F0. In this manner, the AP data storage section 13 stores application data to be used in the respective applications as files of the hierarchy structure.

Returning to the description of Fig. 2 again, the management information storage section 14 is composed of the EEPROM 9, for example. The management information storage section 14 stores information to manage files such as an MF, a DF, an EF, an application DF (ADF), attribute information to manage an access right to a file, and information to manage respective applications, and so on. The management information storage section 14 stores identification information (AID) to identify each application and a specification of CLA byte, in association with each other, as the information to manage the respective applications, as shown in Fig. 6, for example.

Fig. 6 is a diagram showing an example of data which the management information storage section 14 of the present embodiment stores.

In Fig. 6, the management information storage section 14 stores "application name (AID of ADF)", and "CLA specification" in association with each other, as the information to manage an application.

In the example shown in Fig. 6, it is indicated that as for "application 1", "CLA specification" is "specification A". In addition, it is indicated that as for "application 5", "CLA specification" is "specification B".

Returning to the description of Fig. 2 again, the command information storage section 15 is composed of the ROM 7 or the EEPROM 9, for example, and stores command table information indicating a CLA byte, an INS byte and so on corresponding to each command processing.

The communication section 21 is realized by the communication I/F section 4, the CPU 6, and the program stored in the ROM 7, and performs transmission/reception of command and response with the external device 2, via the contact section 3. In addition, the communication section 21 is capable of communicating with the external device 2 by a plurality of logical channels.

The ATR processing section 22 executes a processing to make the communication section 21 output a reset response. When a reset signal is supplied from the external device 2 to a reset terminal of the contact section 3, the ATR processing section 22 acquires ATR data from an EF of an ATR file which stores the ATR data, for example, and outputs the ATR data from the communication section 21.

The specification selection section 23 (an example of a selection section) is realized by the CPU 6, and the program stored in the ROM 7, for example, and selects a specification of CLA byte. The specification selection section 23 selects a specification of CLA byte (for example, "specification A (old specification)" or "specification B (new specification)") including information to designate a logical channel, based on prescribed information. This prescribed information is held in the IC card 1, and can be changed after the power source is supplied. In addition, in the present embodiment, information indicating the maximum number of channel numbers out of the logical channels which are opened at present out of a plurality of the logical channels is included in the prescribed information. That is, the specification selection section 23 selects a specification of CLA byte, based on the information indicating the maximum number out of channel numbers of the logical channels which are opened at present.

For example, the specification selection section 23 acquires information indicating the maximum number out of the channel numbers of the logical channels that are opened at present, which the operating channel information storage section 12 stores. The specification selection section 23 stores "01" indicating "specification A (old specification)" in the identification flag information storage section 11 as identification flag information when the acquired information is not more than "3". In addition, the specification selection section 23 stores "10" indicating "specification B (new specification)" in the identification flag information storage section 11 as the identification flag information when the acquired information is not less than "4" (larger than "3").

Specifically, in the example shown in Fig. 4, the specification selection section 23 acquires "2" as the information indicating the maximum number out of the channel numbers of the logical channels. In this case, since the information is not more than "3", the specification selection section 23 stores "01" in the identification flag information storage section 11 as the identification flag information.

The command processing section 24 (an example of a processing section) is realized by the CPU 6, and the program stored in the ROM 7, and executes various command processings. The command processing section 24 executes a command processing corresponding to the specification of CLA byte which the specification selection section 23 has selected when the communication section 21 receives a command having a CLA byte,. Here, "command processing corresponding to the specification of CLA byte" is a command processing corresponding to a class of a command indicated by the CLA byte, and a logical channel number designated by the CLA byte, which are determined by the specification of CLA byte.

The command processing section 24 has a determination function to determine a CLA byte based on "specification A (old specification)", and a determination function to determine a CLA byte based on "specification B (new specification)". The command processing section 24 determines a CLA byte based on "specification A (old specification) when the identification flag information which the identification flag information storage section 11 stores is "01". And the command processing section 24 executes a command processing corresponding to "specification A (old specification)" based on the command table information which the command information storage section 15 stores when having determined that the CLA byte is normal. In addition, the command processing section 24 determines a CLA byte based on "specification B (new specification) when the identification flag information which the identification flag information storage section 11 stores is "10". And the command processing section 24 executes a command processing corresponding to "specification B (new specification)" based on the command table information which the command information storage section 15 stores when having determined that the CLA byte is normal.

The command processings which the command processing section 24 executes include command processings for various applications, a command processing for management, and a command processing to perform control of opening or closing a logical channel or the like, and so on. In accordance with the respective command processings, processings such as addition of information, change of information and deletion of information are executed to the operating channel information storage section 12, the AP data storage section 13, the management information storage section 14, and the command information storage section 15.

In addition, after having executed the respective command processings, the command processing section 24 makes the communication section 21 output the SW1 byte and the SW2 byte that are status bytes as a response.

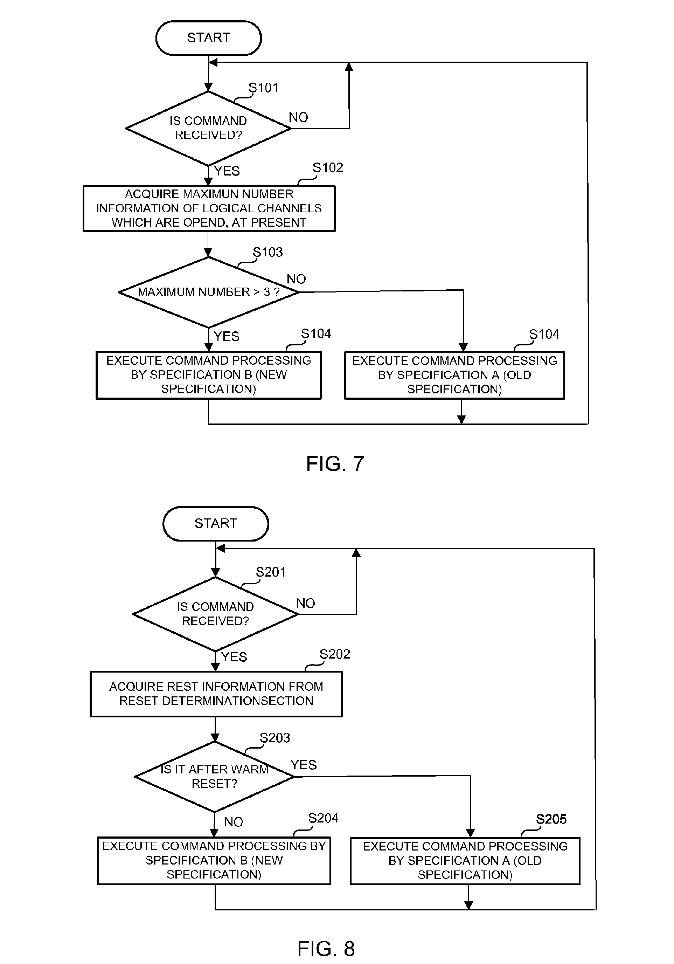

Next, an operation of the IC card 1 according to the present embodiment will be described with reference to Fig. 7.

Fig. 7 is a flow chart showing an example of an operation of the IC card 1 of the present embodiment.

As shown in Fig. 7, the IC card 1 firstly determines whether or not a command has been received (step S101). That is, the communication section 21 of the IC card 1 determines whether or not a command has been received from the external device 2, via the contact section 3 and the communication I/F section 4. When the command has been received (step S101: YES), the communication section 21 advances the processing to a step S102. In addition, when the command has not been received (step S101: NO), the communication section 21 returns the processing to the step S101, and repeats the processing.

In the step S102, the specification selection section 23 of the IC card 1 acquires information (maximum number information) indicating the maximum number out of the channel numbers of the logical channels that are opened at present, which the operating channel information storage section 12 stores. Here, for example, the specification selection section 23 acquires "4" as the maximum number information when the operating channel information storage section 12 stores the information indicating that "logical channel 0" and "logical channel 4" are opened.

Next, the specification selection section 23 determines whether or not the maximum number is larger than 3 (maximum number > 3) (step S103). That is, the specification selection section 23 determines whether or not the acquired maximum number information is larger than "3". When the maximum number information is larger than "3" (step S103: YES), the specification selection section 23 stores "10" in the identification flag information storage section 11 as the identification flag information, and advances the processing to a step S104. In addition, when the maximum number information is not more than "3" (step S103: NO), the specification selection section 23 stores "01" in the identification flag information storage section 11 as the identification flag information, and advances the processing to a step S105.

In the step S104, the command processing section 24 executes a command processing based on "specification B (new specification)". That is, the command processing section 24 executes a command processing corresponding to "specification B (new specification)". After the processing of the step S104, the command processing section 24 makes the communication section 21 output a response toward the external device 2, and returns the processing to the step S101.

In addition, in the step S105, the command processing section 24 executes a command processing based on "specification A (old specification)". That is, the command processing section 24 executes a command processing corresponding to "specification A (old specification)". After the processing of the step S105, the command processing section 24 makes the communication section 21 output a response toward the external device 2, and returns the processing to the step S101.

As described above, the IC card 1 according to the present embodiment is provided with the communication section 21, the specification selection section 23, the command processing section 24. The communication section 21 can communicate with the external device 2 by a plurality of the logical channels. The specification selection section 23 selects a specification of CLA byte (an example of class information) which indicates a class of a command and includes information indicating a logical channel number, based on prescribed information which is held in the own device and can be changed after the power source has been supplied. This prescribed information is a maximum number of the channel numbers of the logical channels that are opened at present, for example. The command processing section 24 can execute command processings corresponding to a plurality of specifications of CLA byte. When the communication section 21 receives a command having a CLA byte, the command processing section 24 executes a command processing corresponding to the specification of CLA byte which the specification selection section 23 has selected.

By this means, the IC card 1 according to the present embodiment can dynamically switch and use a plurality of specifications of CLA byte. Thereby, the IC card 1 can use a plurality of specifications of CLA byte (class information), while keeping the compatibility with the existing specification of CLA byte (class information).

In addition, in the present embodiment, the above-described prescribed information includes information (maximum number of the channel numbers of the logical channels) indicating the maximum value out of the channel numbers of the logical channels which are opened at present, out of a plurality of the logical channels. The specification selection section 23 selects a specification of CLA based on the information indicating the maximum value of the channel numbers. For example, the specification selection section 23 selects "specification B (new specification)" when the maximum number of the channel numbers of the logical channels is larger than a prescribed number (for example "3"), and the specification selection section 23 selects "specification A (old specification)" when the maximum number of the channel numbers of the logical channels is not more than a prescribed number (for example "3").

By this means, even when the IC card 1 of the present embodiment is used in an IC card system (external system 2) corresponding to "specification A (old specification)" shown in Fig. 3, for example, the IC card 1 can execute a command processing corresponding to "specification A (old specification)". In addition, even when the IC card 1 of the present embodiment is used in an IC card system (external system 2) corresponding to "specification B (new specification)", the IC card 1 can execute a command processing corresponding to "specification B (new specification)".

When "specification A (old specification)" and "specification B (new specification)" shown in Fig. 3 are mixed, it is thought that the following problem may occur. For example, a case that an IC card corresponding to "specification B (new specification)" is used in an IC card system corresponding to "specification A (old specification)", and the IC card system has transmitted a command with a CLA byte of "C0h" will be thought. In this case, a problem may occur such that though the IC card system transmits "unique command" and a command of "logical channel 0" of "specification A (old specification)", the IC card corresponding to "specification B (new specification)" erroneously determine the CLA byte of "C0h" as "unique command" and also "logical channel 4".

In addition, for example, a case that an IC card corresponding to "specification A (old specification)" is used in an IC card system corresponding to "specification B (new specification)", and the IC card system has transmitted a command with a CLA byte of "C0h" will be thought. In this case, a problem may occur such that though the IC card system transmits "unique command" and also a command of "logical channel 4" of "specification B (new specification)", the IC card corresponding to "specification A (old specification)" erroneously determine the CLA byte of "C0h" as "unique command" and also "logical channel 0".

In contrast, the IC card 1 of the present embodiment switches and uses "specification A (old specification)" and "specification B (new specification)", based on the maximum number out of the channel numbers of the logical channels which are opened at present. For the reason, when the IC card 1 of the present embodiment is used in the IC card system (external device 2) corresponding to "specification A (old specification)", the IC card 1 executes a command processing corresponding to "specification A (old specification)". That is, when having received a command with a CLA byte of "C0h" from an IC card system corresponding to "specification A (old specification)", the IC card 1 can normally execute the command processing by determining the CLA byte of "C0h" as "logical channel 0". In this manner, the IC card 1 of the present embodiment can prevent that the downward compatibility is lost, regarding some values of CLA byte.

In addition, when the IC card 1 of the present embodiment is used in an IC card system (external device 2) corresponding to "specification B (new specification)" shown in Fig. 3, for example, the IC card 1 executes a command processing corresponding to "specification B (new specification)". That is, when having received a command of the CLA byte of "C0h" from the IC card system corresponding to "specification B (new specification)", the IC card 1 can normally execute a command processing by determining the CLA byte of "C0h" as "logical channel 4".

In this manner, the IC card 1 of the present embodiment can correspond to both of a system corresponding to "specification A (old specification)", and a system corresponding to "specification B (new specification)".

### (Second Embodiment)

Next, the IC card 1 according to a second embodiment will be described with reference to the drawings.

In addition, since the configuration of the IC card 1 according to the present embodiment is the same as the first embodiment shown in Fig. 1 and Fig. 2, the description thereof will be omitted here.

In the present embodiment, the specification selection section 23 selects a specification of CLA byte, based on the determination result by the reset determination section 5 indicating whether or not the reset processing is a warm reset.

Fig. 8 is a flow chart showing an example of an operation of the IC card 1 of the present embodiment.

As shown in Fig. 8, the IC card 1 firstly determines whether or not a command has been received, in the same manner as the processing of the step S101 shown in Fig. 7 (step S201). When the command has been received (step S201: YES), the communication section 21 advances the processing to a step S202. In addition, when the command has not been received (step S201: NO), the communication section 21 returns the processing to the step S201, and repeats the processing.

In the step S202, the specification selection section 23 acquires the reset information from the reset determination section 5. That is, the specification selection unit 23 acquires, from the reset determination section 5, the reset information that is a determination result indicating whether or not a reset signal is resupplied to the own device in a state that the supply of the power source voltage is maintained (whether or not the reset processing is a warm reset).

Next, the specification selection section 23 determines whether or not now is after the warm reset (step S203). That is, the specification selection section 23 determines whether or not now is after the warm reset, based on the acquired reset information. That is, the specification selection section 23 determines whether or not the reset processing is the warm reset, based on the reset information. When now is after the warm reset (step S203: YES), the specification selection section 23 stores "01" in the identification flag information storage section 11 as the identification flag information, and advances the processing to a step S205. In addition, when now is not after the warm reset (now is after a cold reset) (step S203: NO), the specification selection section 23 stores "10" in the identification flag information storage section 11 as the identification flag information, and advances the processing to a step S204.

In the step S204, the command processing section 24 executes a command processing based on "specification B (new specification)". That is, the command processing section 24 executes a command processing corresponding to "specification B (new specification)". After the processing of the step S204, the command processing section 24 makes the communication section 21 output a response toward the external device 2, and returns the processing to the step S201.

In addition, in the step S205, the command processing section 24 executes a command processing based on "specification A (old specification)". That is, the command processing section 24 executes a command processing corresponding to "specification A (old specification)". After the processing of the step S205, the command processing section 24 makes the communication section 21 output a response toward the external device 2, and returns the processing to the step S201.

In the example shown in Fig. 8, an example in which the specification selection section 23 acquires the reset information from the reset determination section 5, and determines whether or not now is after the warm reset has been described. But the present invention is not limited to this. For example, the specification selection section 23 may determine whether or not now is after the warm reset based on the identification flag information which the identification flag information storage section 11 stores. In this case, the ATR processing section 22 stores identification flag information in the identification flag information storage section 11 in the ATR processing, in accordance with whether or not the reset processing is the warm reset. In addition, the ATR processing section 22 outputs an ATR including information (maximum logical channel number) indicating the maximum number out of the channel numbers of the logical channels, and thereby may change the information indicating the maximum number out of the channel numbers of the logical channels, in accordance with whether or not the reset processing is the warm reset.

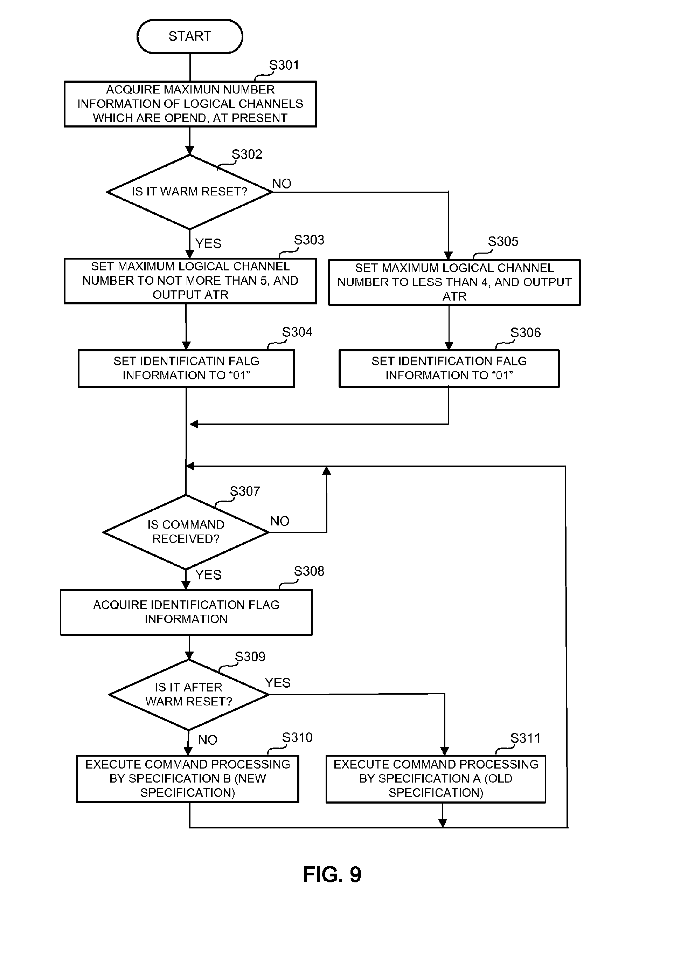

Next, an example of a case that the specification selection section 23 determines whether or not now is after the warm reset based on the identification flag information which the identification flag information storage section stores, will be described with reference to Fig. 9.

Fig. 9 is a flow chart showing another example of an operation of the IC card 1 of the present embodiment.

In Fig.9, when a reset signal is supplied, the IC card 1 firstly acquires the reset information from the reset determination section 5 (step S301). That is, the ATR processing section 22 of the IC card 1 acquires the reset information from the reset determination section 5.

Next, the ATR processing section 22 determines whether or not the reset processing is a warm reset (step S302). The ATR processing section 22 determines whether or not the reset processing is a warm reset based on the acquired reset information, and when the reset processing is the warm reset (step S302: YES), the ATR processing section 22 advances the processing to a step S303. In addition, when the reset processing is not the warm reset (the reset processing is a cold reset) (step S302: NO), the ATR processing section 22 advances the processing to a step S305.

In the step S303, the ATR processing section 22 sets the maximum logical channel number to not more than 4 and outputs an ATR. That is, the ATR processing section 22 adds information indicating that the maximum logical channel number is not more than 4 to the historical byte of the ATR, and makes the communication section 21 output the ATR.

Next, the ATR processing section 22 sets the identification flag information to "01" (step S304). That is, the ATR processing section 22 stores "01" corresponding to "specification A (old specification)" in the identification flag information storage section 11, and advances the processing to a step S307.

In addition, in the step S305, the ATR processing section 22 sets the maximum logical channel number to not less than 5 and outputs an ATR. That is, the ATR processing section 22 adds information indicating that the maximum logical channel number is not less than 5 to the historical byte of the ATR, and makes the communication section 21 output the ATR.

Next, the ATR processing section 22 sets the identification flag information to "10" (step S306). That is, the ATR processing section 22 stores "10" corresponding to "specification B (new specification)" in the identification flag information storage section 11.

In the step S307, the communication section 21 determines whether or not a command has been received. When the command has been received (step S307: YES), the communication section 21 advances the processing to a step S308. In addition, when the command has not been received (step S307: NO), the communication section 21 returns the processing to the step S307, and repeats the processing of the step S307.

In the step S308, the specification selection section 23 acquires the identification flag information from the identification flag information storage section 11.

Next, the specification selection section 23 determines whether or not now is after the warm reset based on the acquired identification flag information (step S309). That is, the specification selection section 23 determines that now is after the warm reset when the acquired identification flag information is "01". In addition, the specification selection section 23 determines that now is not after the warm reset (now is after a cold reset) when the acquired identification flag information is "10". When now is after the warm reset (step S309, YES), the specification selection section 23 advances the processing to a step S311. In addition, when now is not after the warm reset (now is after the cold reset) (step S309: NO), the specification selection section 23 advances the processing to a step S310.

Since the processings of the step S310 and the step S311 are the same as the processings of the step S204 and the step S205 shown in Fig. 8, respectively the description thereof will be omitted here. After each of the processing of the step S310 and the step S311, the command processing section 24 returns the processing to the step S307.

As described above, the IC card 1 according to the present embodiment is provided with the reset determination section 5 to determine whether or not a reset signal is resupplied to the own device in the state that the supply of the power source voltage is maintained. In addition, the above-described prescribed information includes the information indicating the determination result which the reset determination section 5 has determined. The specification selection section 23 selects a specification of CLA byte, based on the information indicating the determination result which the reset determination section 5 has determined, or the identification flag information which is created based on the information indicating the determination result.

By this means, the IC card 1 according to the present embodiment can dynamically switch and use a plurality of the specifications of CLA byte, in the same manner as the first embodiment. Thereby, the IC card 1 can use a plurality of specifications of CLA byte (class information), while keeping the compatibility with the existing specification of CLA byte (class information).

In addition, in the present embodiment, the ATR processing section 22 makes the communication section 21 output an ATR including information (for example, maximum logical channel number) indicating any of a plurality of specifications of CLA byte including information to designate a logical channel, toward the external device 2.

By this means, the external device 2 can confirm the specification of CLA byte which is set at present out of a plurality of specifications of CLA byte.

In the present embodiment, an example has been described in which the specification selection section 23 selects "specification B (new specification)" after the cold reset, and selects "specification A (old specification)" after the warm reset. But the specification selection section 23 is not limited to this. For example, the specification selection section 23 may select "specification A (old specification)" after the cold reset, and may select "specification B (new specification)" after the warm reset. In addition, the specification selection section 23 may be configured to repeatedly perform the warm reset, to thereby alternately select (select in a toggle manner) "specification A (old specification)" and "specification B (new specification)".

### (Third Embodiment)

Next, the IC card 1 according to a third embodiment will be described with reference to the drawings.

In addition, since the configuration of the IC card 1 according to the present embodiment is the same as the first embodiment shown in Fig. 1 and Fig. 2, the description thereof will be omitted here.

In the present embodiment, the specification selection section 23 selects a specification of CLA byte based on specification information indicating a specification of CLA byte corresponding to an application for which a logical channel is opened at present.

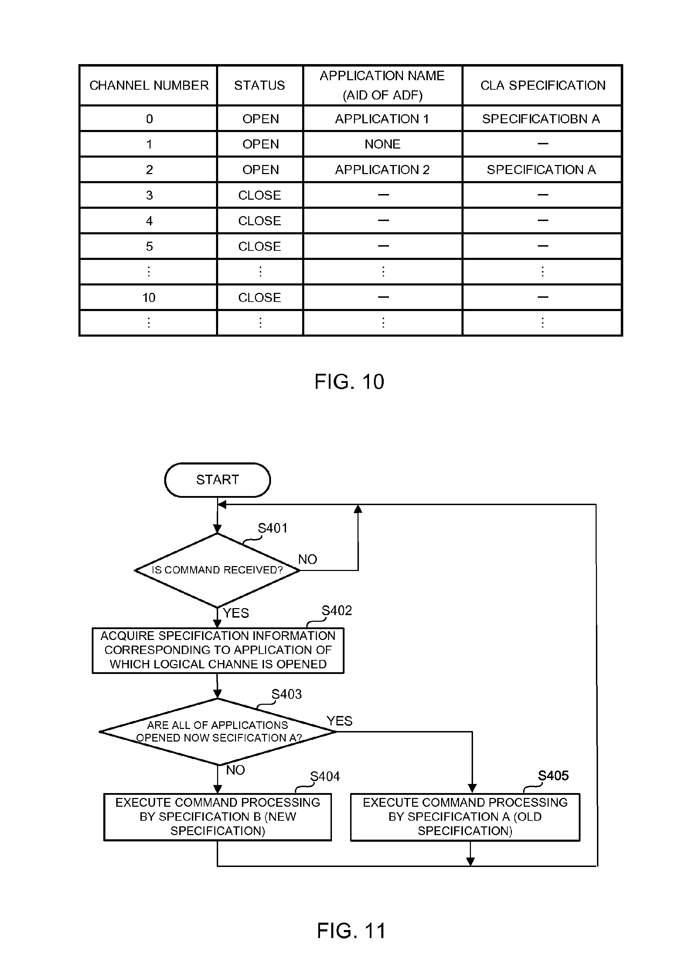

Fig. 10 is a diagram showing an example of data which the operating channel information storage section 12 of the third embodiment stores.

As shown in Fig. 10, the operating channel information storage section 12 according to the present embodiment stores "channel number", "status", "application name (AID of ADF)", and "CLA specification" in association. Here, "CLA specification" is stored in association with "application name (AID of ADF)", based on the information as shown in Fig. 6, which the management information storage section 14 stores. "CLA specification" is specification information indicating a specification of CLA byte corresponding to an application (application which is operating at present) for which a logical channel is opened at present.

In addition, the specification selection section 23 of the present embodiment selects a specification of CLA byte based on "CLA specification" (specification information) which the operating channel information storage section 12 stores. The specification selection section 23 selects "specification A" (old specification) when all of "CLA specification" (specification information) which the operating channel information storage section 12 stores are "specification A", for example. In addition, the specification selection section 23 selects "specification B (new specification)" when not all of "CLA specification" (specification information) which the operating channel information storage section 12 stores are "specification A" (when even one "specification B" exists).

Fig. 11 is a flow chart showing an example of an operation of the IC card 1 of the present embodiment.

As shown in Fig.11, the IC card 1 firstly determines whether or not a command has been received, in the same manner as the processing of the step S101 shown in Fig. 7 (step S401). When the command has been received (step S401: YES), the communication section 21 advances the processing to a step S402. When the command has not been received (step S401: NO), the communication section 21 returns the processing to the processing of the step S401, and repeats the processing of the step S401.

In the step S402, the specification selection section 23 acquires specification information corresponding to an application for which a logical channel is opened at present (application which is operating at present). That is, the specification selection section 23 acquires "CLA specification" (specification information) which the operating channel information storage section 12 stores.

Next, the specification selection section 23 determines whether or not all of the applications which are operating at present are "specification A (old specification)" (step S403). That is, the specification selection section 23 determines whether or not all of the applications which are operating at present are "specification A (old specification)" based on the acquired specification information. When all of the applications which are operating at present are "specification A (old specification)" (step S403: YES), the specification selection section 23 stores "01" in the identification flag information storage section 11, and advances the processing to a step S405. In addition, when not all of the applications which are operating at present are "specification A (old specification)" (when even one "specification B" exists) (step S403: NO), the specification selection section 23 stores "10" in the identification flag information storage section 11, and advances the processing to a step S404.

Since the following processings of the step S404 and the step S405 are the same as the processings of the step S204 and the step S205 shown in Fig. 8, respectively, the description thereof will be omitted here. After each of the processings of the step S404 and the step S405, the command processing section 24 returns the processing to the step S401.

As described above, in the present embodiment, the specification information indicating the specification of CLA byte corresponding to the application for which the logical channel is opened at present is included in the prescribed information. The specification selection section 23 selects a specification of CLA byte based on this specification information. The specification selection section 23 selects "specification A (old specification)" when all of "CLA specification" (specification information) which the operating channel information storage section 12 stores are "specification A", for example. In addition, the specification selection section 23 selects "specification B (new specification)" when not all of "CLA specification" (specification information) which the operating channel information storage section 12 stores are "specification A" (when even one "specification B" exists).

By this means, since the IC card 1 according to the present embodiment can dynamically switch and use a plurality of specifications of CLA byte, in the same manner as the first and second embodiments. Thereby, the IC card 1 can use a plurality of specifications of CLA byte (class information), while keeping the compatibility with the existing specifications of CLA byte (class information).

### (Fourth Embodiment)

Next, the IC card 1 according to a fourth embodiment will be described with reference to the drawings.

In addition, since the configuration of the IC card 1 according to the present embodiment is the same as the first embodiment shown in Fig. 1 and Fig. 2, the description thereof will be omitted here.

In the present embodiment, the command processing section 24 executes a command processing based on a corresponding state of a command processing in each application.

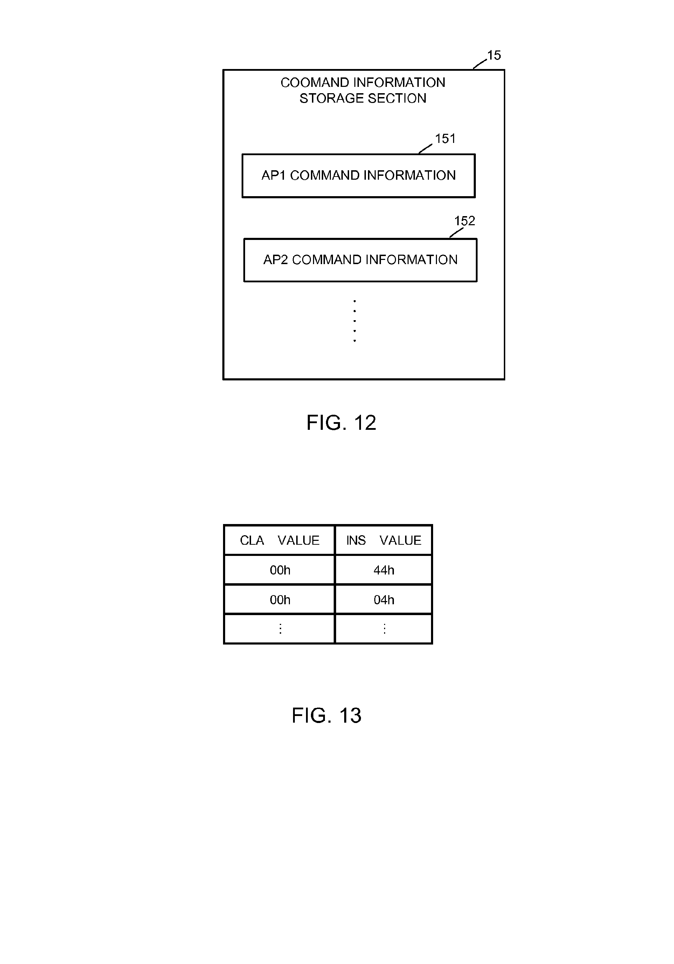

Fig. 12 is a diagram showing a configuration example of the command information storage section 15 of the fourth embodiment.

As shown in Fig. 12, the command information storage section 15 of the present embodiment stores AP1 command information 151, AP2 command information 152 ···.

The AP1 command information 151 is command table information which "application 1" supports, and is information as shown in Fig. 13, for example. Here, the command information storage section 15 stores, as the AP1 command information 151, "CLA value" and "INS value" which "application 1" supports, in association with each other, as shown in Fig. 13.

In addition, the AP2 command information 152 is command table information which "application 2" supports. In addition, the AP2 command information 152 is information as shown in Fig. 13, in the same way as the API command information 151.

In this manner, the command information storage section 15 stores the command information which each application supports. In addition, when an application is added to the IC card 1, the command table information which this application supports is added to the command information storage section 15.

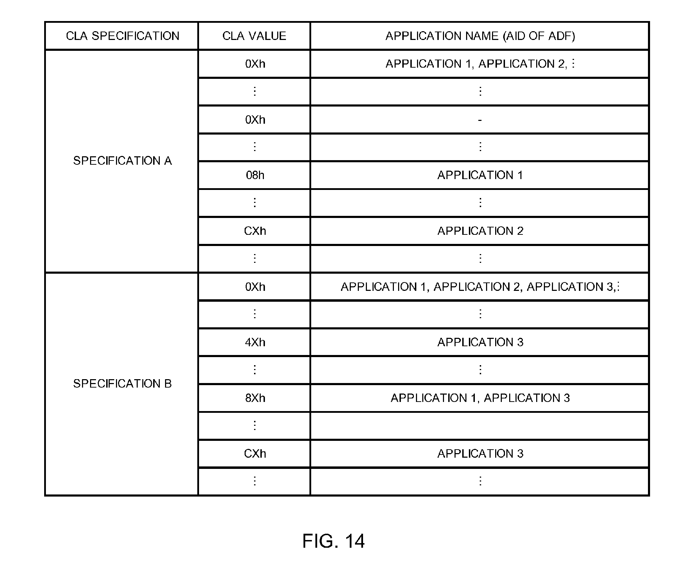

In addition, the management information storage section 14 of the present embodiment stores AP corresponding information which associates a specification of CLA byte, a value of a CLA byte, and a target application. Fig. 14 is a diagram showing an example of data of AP corresponding information which the management information storage section 14 of the present embodiment stores. As shown in this Fig. 14, the management information storage section 14 stores the AP corresponding information which associates "CLA specification", "CLA value", and "application name (AID of ADF)".

In addition, the command processing section 24 of the present embodiment determines a CLA byte based on "specification A (old specification)", based on the AP corresponding information which the management information storage section 14 stores, and acquires a target application corresponding to the CLA value. In addition, the command processing section 24 determines a CLA byte based on "specification B (new specification)", based on the AP corresponding information which the management information storage section 14 stores, and acquires a target application corresponding to the CLA value. In addition, the command processing section 24 acquires a target application corresponding to the logical channel designated by the CLA byte, out of a plurality of the target applications, based on the information which the operating channel information storage section 12 stores when a plurality of target applications corresponding to the CLA value exist. In addition, the command processing section 24 does not acquire a target application when a target application corresponding to the CLA value does not exist.

In this manner, the command processing section 24 determines CLA bytes, based the both systems of "specification A (old specification)" and "specification B (new specification)", and acquires target applications for the respective specifications of CLA byte.

In addition, when the acquired target application is one, the command processing section 24 executes a command processing by the target application. Here, in the case that the acquired target application is one, a case that the command processing section 24 has acquired the same target application in both of "specification A (old specification)" and "specification B (new specification)", and a case that the command processing section 24 has acquired a target application in any one of "specification A (old specification)" and "specification B (new specification)", are included.

In addition, when the acquired target applications are plural, the command processing section 24 determines whether or not the received command is supported in each target application, based on the command table information of each target application which the command information storage section 15 stores. The case that the acquired target applications are plural is a case that the command processing section 24 has acquired a different target application in each of "specification A (old specification)" and "specification B (new specification)".

In addition, when the received command is supported in one of a plurality of the target applications, the command processing section 24 executes a command processing by the relevant target application. In addition, when the received command is supported in a plurality of the target applications, or when the received command is not supported in all of a plurality of the target applications, the command processing section 24 executes a command processing corresponding to the above-described specification which the specification selection section 23 has selected. In this case, the command processing section 24 executes a command processing corresponding to the specification of CLA byte selected by the selection method of the specification selection section 23 according to the above-described first to third embodiments.

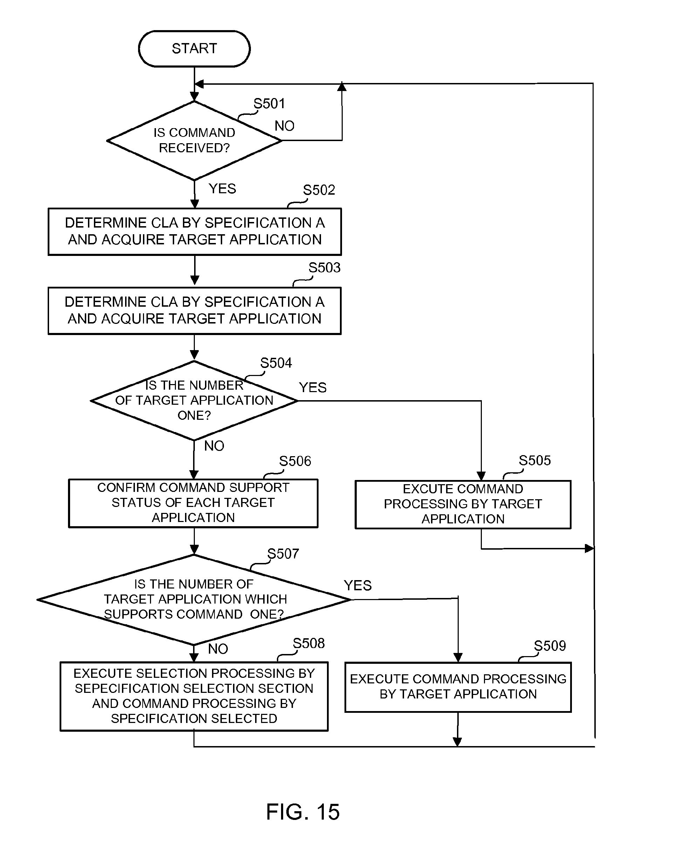

Next, an operation of the IC card 1 according to the present embodiment will be described with reference to Fig. 15.

Fig. 15 is a flow chart showing an example of an operation of the IC card 1 of the present embodiment.

As shown in Fig. 15, the IC card 1 firstly determines whether or not a command has been received, in the same manner as the processing of the step S101 shown in Fig. 7 (step S501). When the command has been received (step S501: YES), the communication section 21 advances the processing to a step S502. When the command has not been received (step S501: NO), the communication section 21 returns the processing to the processing of the step S501, and repeats the processing of the step S501.

In the step S502, the command processing section 24 determines a CLA byte based on "specification A (old specification)", and acquires a target application corresponding to the CLA value. That is, the command processing section 24 determines a CLA byte based on "specification A (old specification)", based on the AP corresponding information which the management information storage section 14 stores, and acquires a target application corresponding to the CLA value.

Next, the command processing section 24 determines a CLA byte based on "specification B (new specification)", and acquires a target application corresponding to the CLA value (step S503). That is, the command processing section 24 determines a CLA byte based on "specification B (new specification)", based on the AP corresponding information which the management information storage section 14 stores, and acquires a target application corresponding to the CLA value.

Next, the command processing section 24 determines whether or not the acquired target application is one (step S504). When the acquired target application is one (step S504: YES), the command processing section 24 advances the processing to a step S505, and executes a command processing by the target application.

In addition, when the acquired target application is not one (different target applications have been acquired based on "specification A (old specification)" and "specification B (new specification)") (step S504: NO), the command processing section 24 advances the processing to a step S506.

In the step S506, the command processing section 24 confirms command support status of each target application. That is, the command processing section 24 confirms whether or not a pair of "CLA value" coincident with the received command and "INS value" exists in the information of a command supported by a target application, which the command information storage section 15 stores.

Next, the command processing section 24 determines whether or not the target application which supports the received command is one (step S507). That is, the command processing section 24 determines whether or not the received command is supported in one of the target application corresponding to "specification A (old specification)", and the target application corresponding to "specification B (new specification)". When the target application which supports the command is one (step S507: YES), the command processing section 24 advances the processing to a step S509, and executes a command processing by the target application.

In addition, when the target application which supports the command is not one (step S507: NO), the command processing section 24 advances the processing to a step S508. Here, in the case that the target application which supports the command is not one, a case that two target applications do not support the command, and a case that no target application which supports the command does exist are included.

In the step S508, the command processing section 24 makes the specification selection section 23 select a specification of CLA byte, and executes a command processing corresponding to the specification of CLA byte which the specification selection section has selected. In addition, one or a combination of a plurality of the processings of the first - third embodiments can be applied to the selection processing to select a specification of CLA byte by the specification selection section 23.

After each of the processings of the step S505, the step S508, and the step S509, the command processing section 24 returns the processing to the step S501.

As described above, in the present embodiment, in the specification of CLA byte, "specification A (old specification)" (an example of a first specification), and "specification B (new specification)" (an example of a second specification) which is different from "specification A (old specification)" are included. When the command processing corresponding to the CLA byte which the received command has exists in both of the target application corresponding to "specification A (old specification)", and the target application corresponding to "specification B (new specification)", or when the command processing corresponding to the CLA byte which the received command has does not exist in any of the target application corresponding to "specification A (old specification)" and the target application corresponding to "specification B (new specification)", the command processing section 24 executes a command processing corresponding to the specification of CLA byte which the specification selection section 23 has selected.
In addition, when the command processing exists in any one of the target application corresponding to "specification A (old specification)" and the target application corresponding to "specification B (new specification)", or when the target application is one, the command processing section 24 executes a command processing corresponding to the target application.

By this means, since the IC card 1 according to the present embodiment executes a command processing, after having confirmed the support status of the received command in the target application, the IC card 1 can effectively execute a command processing. For example, in the IC card 1 according to the present embodiment, when the received command is supported in one of the target applications, it is possible to execute a command processing, while keeping the compatibility with a different specification of CLA byte, without using the specification selection section 23.

### (Fifth Embodiment)

Next, an IC card 1a according to a fifth embodiment will be described with reference to the drawings.

In the present embodiment, a specification change command processing to change the above-described identification flag information (an example of designation information) is provided, and the specification selection section 23 selects a specification of CLA byte based on the identification flag information which is changed by the external device 2.

In addition, the hardware configuration of the IC card 1a according to the present embodiment is the same as the first embodiment shown in Fig. 1, the description thereof will be omitted here.

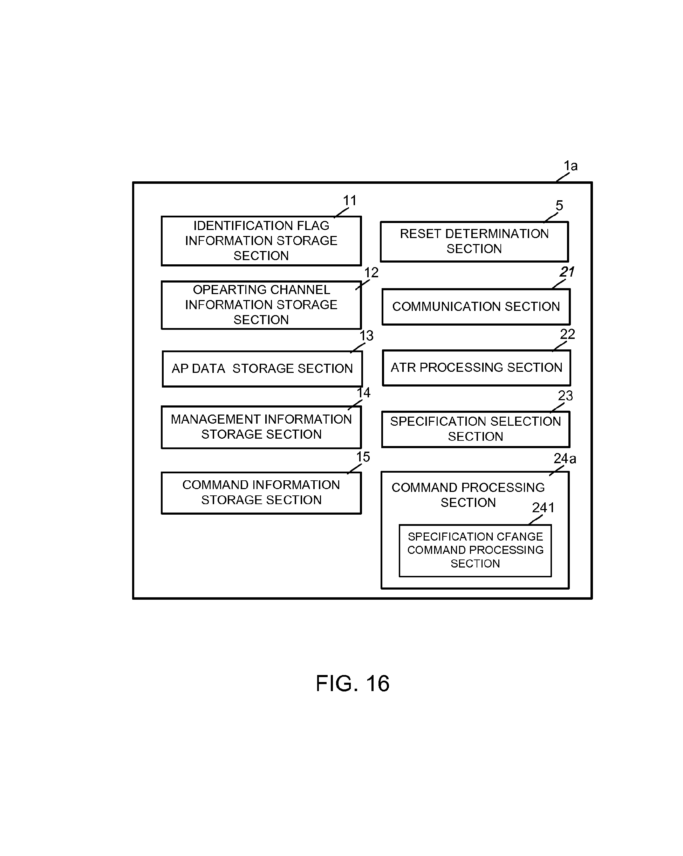

Fig. 16 is a block diagram showing an example of a functional configuration of the IC card 1a of the fifth embodiment.

In Fig. 16, the IC card 1a is provided with the identification flag information storage section 11, the operating channel information storage section 12, the AP data storage section 13, the management information storage section 14, the command information storage section 15, the reset determination section 5, the communication section 21, the ATR processing section 22, the specification selection section 23, and a command processing section 24a.

Here, the respective sections shown in Fig. 16 are realized using the hardware shown in Fig. 1.

In addition, in Fig. 16, the same symbols are given to the same components as the functional components shown in Fig. 2, and the description thereof will be omitted.

In the present embodiment, the prescribed information is designation information to designate a specification of CLA byte, and includes identification flag information which can be changed from the external device 2.

In addition, in the present embodiment, the specification selection section 23 selects a specification of CLA byte based on the identification flag information which the identification flag information storage section 11 stores. When the identification flag information is "01" or "10", the specification selection section 23 determines that the identification flag information is set. When the identification flag information is "00", the specification selection section 23 determines that the identification flag information is not set. For example, when the identification flag information is "01", the specification selection section 23 selects "specification A (old specification)" as the specification of CLA byte. When the identification flag information is "10", the specification selection section 23 selects "specification B (new specification)" as the specification of CLA byte.

In addition, the command processing section 24a is provided with at least a specification change command processing section 241, and changes the identification flag information, in accordance with a specification change command (an example of change request) received from the external device 2 via the communication section 21. In addition, when the specification selection section 23 selects "specification A (old specification)" as a specification of CLA byte, the command processing section 24a executes a command processing corresponding to "specification A (old specification)". In addition, when the specification selection section 23 selects "specification B (new specification)" as a specification of CLA byte, the command processing section 24a executes a command processing corresponding to "specification B (new specification)". In addition, when the specification selection section 23 determines that a specification of CLA byte is not designated, the command processing section 24a executes a command processing corresponding to a specification (any one of "specification A (old specification)" and "specification B (new specification)" which is previously determined by the program that the ROM 7 or the EEPROM 9 stores.

The specification change command processing section 241 executes a command processing of a specification change command which changes the identification flag information stored in the identification flag information storage section 11. Here, the specification change command is composed of a CLA byte of "80h", an INS byte of "02h", a parameter byte (P1) of "00h", and a parameter byte (P2) of "01h" or "02h". In addition, when the IC card 1a receives the specification change command in which the parameter byte (P2) is "01h", the specification change command processing section 241 stores "01" in the identification flag information storage section 11 as the identification flag information. In addition, when the IC card 1a receives the specification change command in which the parameter byte (P2) is "02h", the specification change command processing section 241 stores "10" in the identification flag information storage section 11 as the identification flag information.

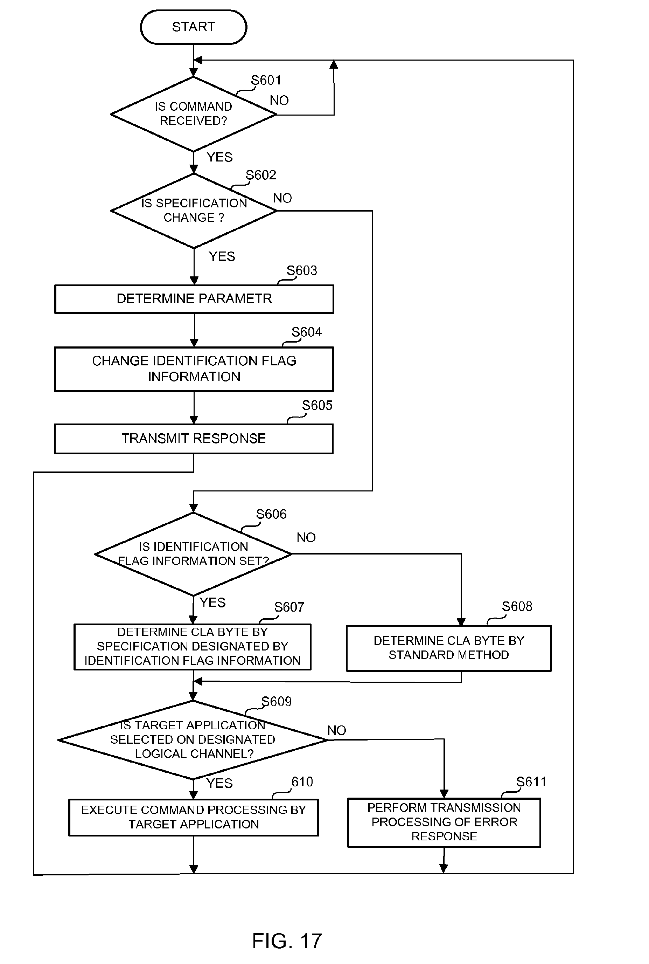

Next, an operation of the IC card 1a according to the present embodiment will be described with reference to Fig. 17. Fig. 17 is a flow chart showing an example of an operation of the IC card 1a of the present embodiment.

As shown in Fig. 17, the IC card 1a firstly determines whether or not a command has been received, in the same manner as the processing of the step S101 shown in Fig. 7 (step S601). When the command has been received (step S601: YES), the communication section 21 advances the processing to a step S602. When the command has not been received (step S601: NO), the communication section 21 returns the processing to the processing of the step S601, and repeats the processing of the step S601.

In the step S602, the command processing section 24a determines whether or not the received command is a specification change command. When the received command is the specification change command (step S602: YES), the command processing section 24a advances the processing to a step S603. In addition, when the received command is not the specification change command (step S602: NO), the command processing section 24a advances the process to a step S606.

In the step S603, the specification change command processing section 241 of the command processing section 24a determines the parameter bytes (P1, P2). That is, the specification change command processing section 241 confirms that the parameter byte (P1) is "00h" and the parameter byte (P2) is ""01h" or "02h".

Next, the specification change command processing section 241 changes the identification flag information (step S604). That is, when the parameter byte (P2) is "01h", the specification change command processing section 241 stores "01" in the identification flag information storage section 11 as the identification flag information. In addition, when the parameter byte (P2) is "02h", the specification change command processing section 241 stores "10" in the identification flag information storage section 11 as the identification flag information.

Next, the specification change command processing section 241 transmits a response to the specification change command toward the external device 2 (step S605). Here, the specification change command processing section 241 outputs a response including a status byte (SW1 byte and SW2 byte), in accordance with the received specification change command. After the processing of the step S605, the specification change command processing section 241 returns the processing to the step S601.

In addition, in the step S606, the specification selection section 23 determines whether or not the identification flag information is set. That is, the specification selection section 23 determines that the identification flag information is set when the identification flag information is "01" or "10". In addition, the specification selection section 23 determines that the identification flag information is not set when the identification flag information is "00". When having determined that the identification flag information is set (step S606: YES), the specification selection section 23 advances the processing to a step S607. In addition, when having determined that the identification flag information is not set (step S606: NO), the specification selection section 23 advances the processing to a step S608.

In the step S607, the command processing section 24a determines a CLA byte based on the specification designated by the identification flag information. That is, the specification selection section 23 selects "specification A (old specification)" or "specification B (new specification)" based on the identification flag information, and the command processing section 24a determines a CLA byte of the received command based on the specification of CLA byte which the specification selection section 23 has selected. After the processing of the step S607, the command processing section 24a advances the processing to a step S609.

In addition, in the step S608, the command processing section 24a determines a CLA byte based on a standard system. That is, the command processing section 24a determines a CLA byte of the received command, by the specification which is previously determined based on the program which the ROM 7 or the EEPROM 9 stores.

In the step S609, the command processing section 24a determines whether or not the target application is selected on the designated logical channel. That is, the command processing section 24a determines whether or not "status" which is associated with the logical channel that the received command designates is "open", based on the information which the operating channel information storage section 12 stores. In addition, the command processing section 24a determines whether or not a target application (AID) which is associated with the logical channel that the received command designates, based on the information which the operating channel information storage section 12 stores. The command processing section 24a determines whether or not the target application is selected on the designated logical channel, by both of whether or not "status" associated with this logical channel is "open", and whether or not the target application (AID) exists. For example, when "status" associated with the logical channel is "open", and the target application (AID) exists, the command processing section 24a determines that the target application is selected on the designated logical channel. In addition, when "status" associated with the logical channel is not "open", or the target application (AID) does not exist, the command processing section 24a determines that the target application is not selected on the designated logical channel.

When the target application is selected on the logical channel (step S609: YES), the command processing section 24a advances the processing to a step S610, and executes the command processing by the target application. In addition, after having executed the command processing, the command processing section 24a executes a processing to transmit a response including the status bytes (SW1 byte and SW2 byte).

In addition, when the target application is not selected on the logical channel (step S609: NO), the command processing section 24a advances the processing to a step S611, and executes a transmission processing of an error response.

In addition, after each of the processings of the step S601 and the step S611, the command processing section 24a returns the processing to the step S601.

As described above, in the embodiment, the prescribed information is the identification flag information (designation information) to designate a specification of CLA byte, and includes the identification flag information which can be changed from the external device 2. The specification selection section 23 selects the specification of CLA byte based on the identification flag information. And the command processing section 24a changes the identification flag information, in accordance with the change request (for example, specification change command) received from the external device 2 via the communication section 21. In addition, when the communication section 21 receives a command, the command processing section 24a executes a command processing corresponding to the specification of CLA byte which the specification selection section 23 has selected.

By this means, the IC card 1a according to the present embodiment can dynamically change the specification of CLA byte by a change request (for example, specification change command) from the external device 2. Accordingly, since the IC card 1a according to the present embodiment can dynamically switch and use a plurality of specifications of CLA byte, the IC card 1a can keep the compatibility with a plurality of specifications of CLA byte (class information).

In addition, since the IC card 1a according to the present embodiment switches specifications of CLA byte by a specification change command that is a dedicated command, the IC card 1a can dynamically switch different specifications of CLA byte at an optional timing.

In addition, in the above-described embodiment, the example to change a specification of CLA byte by a specification change command, as an example of a change request, has been described, but a change request is not limited to this. For example, a change request may use a PPS (Protocol and Parameters Selection) exchange to be executed after outputting an ATR.

In addition, in each of the above-described embodiments, the example to independently practice each of the embodiments has been described, but the respective embodiments may be practiced in combination.

In addition, in each of the above-described embodiments, the IC card 1 (1a) opens a logical channel for each application, an ADF is selected on the logical channel, and an application corresponding to the relevant ADF operates. But the present invention is not limited to this. For example, a file to be selected on a logical channel is not limited to an ADF, but may be an MF, a DF, and an EF, or the like. In addition, in this case, a group of commands (command table) each of which operates in a function unit associated with each file exist, and the command processing section 24 (24a) executes a command processing when the received command exists in the group of commands, and the command processing section 24 (24a) ends in error when the received command does not exist in the group of commands.

In addition, in each of the above-described embodiments, the IC card 1 (1a) has been described as an example of a portable electronic device, but a portable electronic device may be another portable electronic device such as an IC tag, a SIM card (Subscriber Identity Module) to be used in a portable telephone or the like.

In addition, in each of the above-described embodiments, the IC card 1 (1a) has a configuration to be provided with the EEPROM 9, but the IC card 1 (1a) is not limited to this. For example, the IC card 1 (1a) may be provided with a flash EEPROM, a FeRAM (Ferroelectric Random Access Memory: Ferroelectric Memory) or the like, in place of the EEPROM 9.

In addition, in each of the above-described embodiments, the example that the IC chip 100 is composed of one chip has been described, but without being limited to this, the IC chip 100 may be composed of a plurality of LSI chips.

In addition, in each of the above-described embodiments, the example that two specifications of "specification A (old specification)" and "specification B (new specification)" coexist as specifications of CLA byte, but three or more specifications may coexist.

According to at least one embodiment described above, the portable electronic device has the specification selection section 23 which selects a specification of CLA byte including the information to designate the logical channel, based on the prescribed information which the own device holds and which can be changed after the power source has been supplied. By this means, the portable electronic device can keep the compatibility with can a plurality of specifications of CLA byte (class information).

In addition, a program for realizing the functions of the respective components provided in the IC card 1 (1a) in the embodiment is recorded in a computer readable recording medium, and the IC card that is a computer system reads and executes the program recorded in the recording medium, and thereby the processings in the above-described respective components provided in the IC card 1 (1a) may be performed. Here, "a computer system reads and executes the program recorded in the recording medium" includes installing the program in a computer system. "Computer system" mentioned here shall include an OS and a hardware such as a peripheral device.

In addition, "computer system" may include a plurality of computer devices which are connected via Internet, a WAN, a LAN, a network including a communication line such as a dedicated line. In addition, "computer readable recording medium" means a portable medium such as a flexible disk, a magneto-optical disk, a ROM, a CD-ROM, and a storage device, such as a hard disk drive which is to be incorporated in a computer system. The recording medium which has stored the program in this manner may be a non-transient recording medium such as a CD-ROM.

In addition, in the recording medium, a recording medium which is provided at an inside or an outside accessible from a delivery server, so as to deliver the relevant program is included. In addition, a configuration that the program is divided into a plurality of pieces, and the divided programs are downloaded at different timings respectively, and then are combined in the respective components provided in the IC card 1 (1a) may be used, and delivery servers to deliver the respective divided programs may be different. Further, "computer readable recording medium" shall include one which holds a program for a prescribed time, such as a volatile memory (RAM) inside a computer system that functions as a server or a client when the program is transmitted via a network. In addition, the above-described program may be one for realizing a part of the above-described functions. Further, the above-described program may be one which can realize the above-described function by the combination with a program which has already been recorded in a computer system, that is, a so-called difference file (difference program).

While certain embodiments have been described, these embodiments have been presented by way of example only, and are not intended to limit the scope of the inventions.

## Claims

1. A portable electronic device, comprising:
a communication section configured to communicate with an external device by a plurality of channels;
a selection section configured to select a specification of class information which indicates a class of a command and includes information indicating a channel number of the channel, from a plurality of the specifications of class information, based on prescribed information which is held in the portable electronic device, and can be changed after a power source has been supplied; and
a processing section configured to execute command processings corresponding to a plurality of the specifications of class information, and, when the communication section receives a command having the class information, to execute the command processing corresponding to the specification of class information that the selection section has selected.

2. The portable electronic device according to Claim 1, wherein:
the prescribed information includes information indicating a maximum value of the channel numbers of the channels which are opened at present; and
the selection section selects the specification of class information, based on the information indicating the maximum value of the channel numbers.

3. The portable electronic device according to Claim 1 or 2, further comprising:
a reset determination section which determines whether or not a reset signal is resupplied to the portable electronic device in a state that supply of a power source voltage is maintained;
wherein
the prescribed information includes information indicating a determination result which the reset determination section has determined; and
the selection section selects the specification of class information based on the information indicating the determination result.

4. The portable electronic device according to Claim 3, further comprising:
a second processing section which sets identification flag information based on the information indicating the determination result which the reset determination section has determined;
wherein
the prescribed information includes the identification flag information; and
the selection section selects the specification of class information, based on the identification flag information.

5. The portable electronic device according to Claim 4, wherein the second processing section adds information indicating a maximum logical channel number which is set based on the information indicating the determination result that the reset determination section has determined, to an ATR (Answer to reset) which the transmission section transmits.

6. The portable electronic device according to any one of Claim 1 to Claim 5, wherein:
the prescribed information includes specification information indicating the specification of class information corresponding to an application for which the channel is opened at present; and
the selection section selects the specification of class information based on the specification information.

7. The portable electronic device according to any one of Claim 1 to Claim 6, wherein:
a plurality of the specifications of class information include a first specification, and a second specification different from the first specification; and
the processing section executes the command processing corresponding to the specification of class information which the selection section has selected, when a command processing corresponding to the class information which the received command has, exists in both of an application corresponding to the first specification and an application corresponding to the second specification, or when the command processing corresponding to the class information which the received command has, does not exist in any of the application corresponding to the first specification and the application corresponding to the second specification.

8. The portable electronic device according to Claim 7, wherein:
the prescribed information includes designation information which designates the specification of class information and can be changed from the external device;
the selection section selects the specification of class information based on the designation information; and
the processing section changes the designation information in accordance with a change request received from the external device via the communication section, and executes the command processing corresponding to the specification of class information which the selection section has selected when the communication section receives the command.
